# EUROPÄISCHE PATENTSCHRIFT

(11) **EP 1 916 288 B1**
(45) Veröffentlichungstag und Bekanntmachung des Hinweises auf die Patenterteilung: **30.04.2014**
(21) Anmeldenummer: 07115817.4
(22) Anmeldetag: 06.09.2007
(51) Int. Cl.: C10L 5/40, C10L 5/44, C10L 5/48

(54) **Verfahren zur Herstellung von Formlingen zur Verbrennung in Pelletbefeuerungsanlagen**
Method of the production of shaped products for combustion in pellet combustion plants
Procédé de production de corps moulés visés à la combustion dans des fours à pellets

(30) Priorität: 25.09.2006 DE 102006045613; 22.01.2007 DE 102007004145
(43) Veröffentlichungstag der Anmeldung: 30.04.2008
(73) Patentinhaber: Wieser, Konrad, 86488 Breitenthal (DE)
(72) Erfinder: Wieser, Konrad, 86488 Breitenthal (DE)
(74) Vertreter: Cremer, Christian

(56) Entgegenhaltungen:
- EP-A2- 0 129 856
- EP-A2- 0 549 861
- DE-A1- 2 935 103
- DE-A1- 3 235 038
- US-A1- 2002 088 170
- DATABASE WPI Week 197824 Thomson Scientific, London, GB; AN 1978-43340A XP002662195, -& JP 53 015081 B (MITSUBISHI PAPER MILLS LTD) 22. Mai 1978 (1978-05-22)

## Beschreibung

Die vorliegende Erfindung betrifft ein Verfahren zur Herstellung von Formlingen zur Verbrennung in Pelletbefeuerungsanlagen.

In den letzten Jahren haben Pelletbefeuerungsanlagen zunehmend Verbreitung gefunden. Üblicherweise werden dort Pellets verbrannt, die aus Holz hergestellt worden sind. Rohstoff für Pellets sind Holzspäne, die idealerweise homogen in Größe und Form und möglichst sortenrein sein sollen. Sie sollen außerdem einen möglichst gleichmäßigen Feuchtegehalt und einheitliche Temperatur aufweisen. Die Späne werden durch eine Matrize mit Hilfe von speziellen Rollen hindurchgepresst. Hierfür ist ein sehr hoher Druck notwendig. Hilfsstoffe sind für die Pelletherstellung an sich nicht erforderlich; manchmal wird jedoch Stärke zugesetzt, um den Abrieb zu verringern. Die WO 02/50220 nutzt den Zusatz von pflanzlichem Öl, um bei aus Holzspänen oder Sägemehl hergestellten Pellets Abrieb und damit Staubbildung zu reduzieren.

Ein Nachteil des bekannten Verfahrens ist darin zu sehen, dass zur Erzielung von Pellets, welche die Anforderungen der Norm erfüllen sollen, ein möglichst homogenes Ausgangsmaterial erforderlich ist. Dies bedeutet, dass Abfallholz zur Pelletherstellung nicht verwendet werden kann, sondern wertvolles Erstmaterial eingesetzt werden muss. Weiter ist der Energiebedarf vergleichsweise hoch, da die Pellets mit sehr hohem Druck durch die Bohrungen der Matrize hindurchgestoßen werden müssen.

Pellets in den unterschiedlichsten Zusammensetzungen, in Kombination mit Holz, sind beispielsweise in den folgenden Druckschriften offenbart: WO 99/51709, SE 524263, EP 1 471 132.

Die Verwertung und Entsorgung von Abfallstoffen stellt nach wie vor ein großes Problem dar. Dies trifft insbesondere auf so genannte Problemabfallstoffe zu, d.h. Abfallstoffe, die toxisch sind bzw. toxische Bestandteile enthalten sowie Abfallstoffe, die aufgrund ihrer Konsistenz schwierig zu entsorgen sind, beispielsweise staubförmige Abfallstoffe. Verschärft wird diese Problematik durch jüngere Gesetzgebung, wonach vor der Deponierung von Abfallstoffen darin enthaltene Restenergie zu nutzen ist. Besonders problematische Abfallstoffe sind Reststäube aus Lackierereien und Kunststoffbeschichtungsanlagen, die Farben und Lacke beinhalten. Diese staubförmigen Abfallstoffe werden zurzeit in Müllverbrennungsanlagen und Pyrolyseanlagen verbrannt, was jedoch äußerst problematisch ist, da beim Einkippen des staubförmigen Stoffes in die Verbrennungs- bzw. Verschwelungsanlage eine extrem hohe Staubbelastung für die Arbeiter auftritt und da staubförmige Abfallstoffe beim Einbringen in den Verbrennungs- bzw. Verschwelungsraum leicht verpuffen und unverbrannt in den Rauchgasfilter gelangen, d.h. in der Anlage aufsteigen. Ähnliche Probleme tauchen bei der Entsorgung von pulver- und staubförmigen Chemikalien auf. Auch Schlämme, insbesondere Kläranlagenschlämme und so genannte Zyklonschlämme aus Müllverbrennungs- und Müllpyrolyseanlagen sind Problemabfallstoffe. Je nach Ursprung der in den Kläranlagen behandelten Abwässer, beispielsweise aus Ledergerbereien, sind die anfallenden Klärschlämme oft toxisch. So beispielsweise kann der aus Abwässern einer Gerberei entstehende Klärschlamm chromhaltig sein. Ein übliches Verfahren zur Entsorgung solcher Schlämme ist das Beimischen von Kalk, die Einstellung des Trockensubstanzgehalts auf 20 bis 40% und das Lagern in der Deponie. Wie aus den aufgeführten Beispielen deutlich wird, gibt es kein einziges gemeinsames Verfahren, mit welchem möglichst viele Problemabfallstoffe entsorgt werden können. Stattdessen muss für jeden Abfallstoff bzw. für jede Abfallstoffklasse ein gesondertes Entsorgungsverfahren eingesetzt werden.

Aus der DE 32 26 798 C2 und der DE 34 01 220 A1 sind jeweils Verfahren zur Verwertung von Abfallstoffen bekannt. Es wird jeweils Müll bis zu einer bestimmten Größe zerkleinert, feuchte Abfallstoffe werden entwässert. Anschließend werden diese vorbereiteten Abfallstoffe mit Branntkalk versetzt, vermischt und einer Brikettierpresse zugeführt, wo Briketts hergestellt werden, die dann in einer Verbrennungsanlage verbrannt werden. Bei diesen Druckschriften geht es zwar prinzipiell ebenfalls um die Entsorgung von Müll, es werden jedoch Problemabfallstoffe gerade nicht berücksichtigt. Zudem erhöht das Zusetzen von Branntkalk die zu entsorgende Müllmenge. Die Entwässerung feuchter Abfallstoffe bedarf zusätzlicher Energie und das Pressen zu Briketts ist verhältnismäßig energieaufwändig. Insgesamt verschlechtert sich dadurch die Energiebilanz, d. h. das Verhältnis von der durch die Verbrennung bereitgestellten Energie zu der zur Herstellung der Müllbriketts eingesetzten Energie.

Die JP 53-/015081 B offenbart ein Verfahren zur Herstellung eines Brennstoffs, bei dem entwässerter Klärschlamm und Sägemehl in einem Gewichtsverhältnis von 1/5 bis 1/10 vermischt werden. Anschließend wird die Mischung geformt und getrocknet.

In Anbetracht des Standes der Technik ist Aufgabe der vorliegenden Erfindung, ein Verfahren bereitzustellen, mit dem Pellets hergestellt werden können, die aus Rest- und Abfallhölzern bestehen können. Insbesondere wird ein energie effizientes Verfahren zur Herstellung von energiereichen Pellets aus Abfallstoffen gesucht. Ferner sollen die Prozessanforderungen bei der Herstellung reduziert werden. Gemäß einem weiteren Aspekt kann auch Aufgabe der vorliegenden Erfindung sein, ein Verfahren bereitzustellen, mit welchem energiehaltige Abfallstoffe, insbesondere Problemabfallstoffe, verwertet und die Deponiemengen reduziert werden können.

Die vorliegende Erfindung wird zumindest teilweise gelöst durch ein Verfahren nach Anspruch 1. Vorteilhafte Ausgestaltungen sind Gegenstand der Unteransprüche.

Das erfindungsgemäße Verfahren umfasst die folgenden Schritte:
a) Mischen von zerkleinertem Holz und pastösen Abfallstoffen als Mittel, welche die Fließfähigkeit verbessern, wobei das Verhältnis von Holz zu Fließfähigkeitsverbesserer in der Mischung 85:15 bis 95:5 beträgt, wobei ein Trockensubstanzgehalt der pastösen Abfallstoffe 20 bis 40 % beträgt und wobei eine Mischung aus dem zerkleinerten Holz und den die Fließfähigkeit verbessernden Mitteln als eine fließfähige, formbare Masse entsteht,
b) Ausbilden von Formlingen in der Art von Pellets mit Hilfe eines Schneckenextruders
c) Trocknen der Formlinge, wobei das Trocknen bei Temperaturen bis max. 90 °C geschieht, und wobei der Anteil des die Fließfähigkeit verbessernden Mittels in den Formlingen nach dem Trocknen 3 bis 7 Gew.-% beträgt, und
d) Sortieren der Formlinge nach dem Trocknen nach Größe oder Form, wobei aussortierte Formlinge einer Befeuerungsanlage zugeführt werden, welche die zum Trocknen von Formlingen erforderliche Energie bereitstellt.

Als Holzbestandteile werden insbesondere Altholz, Abfallholz, Abbruchholz oder Astholz eingesetzt. Im Gegensatz zu herkömmlichen Pelletherstellungsverfahren ist Sortenreinheit nicht erforderlich.

Als fließfähigkeitsverbessernde Mittel kommen Papierschlamm und/oder Klärschlamm und/oder Reste aus Biogasanlagen zum Einsatz. Die Fließfähigkeitsverbesserungsmittel dienen als Schmiermittel bzw. als Klebemittel. Sie dienen der Verbindung der Holzbestandteile und lösen das Holz etwas an, insbesondere beim Einsatz von Papierschlamm, so dass das Holz gut benetzbar ist. Der Anteil des Fließfähigkeitsverbesserers in dem getrockneten Brennstoff wird möglichst gering gehalten und übersteigt einen Anteil von 3 - 7 Gew.-% nicht.

Neben dem Hauptbestandteil Holz können als Energieträger zusätzlich, neben dem Hauptenergieträger Holz, Stroh, Getreide, Gras, etc. zugeschlagen werden. Zur Erhöhung der Energiedichte ist vorgesehen, dass Kohlenstäube, Altfette, gereinigtes Altöl, Fichtennadelextrakt oder harzhaltige Rinden zugeschlagen werden. Damit kann ein Qualitätsausgleich erfolgen, falls die eingesetzten Ausgangsprodukte keine ausreichend hohe Energiedichte haben. Der Anteil an energiedichteerhöhenden Zuschlagsstoffen übersteigt vorzugsweise 2 Gew.-% nicht.

Nach einer weiteren, bevorzugten Ausführung wird zu der Mischung aus Holz und Fließfähigkeitsverbesserer und ggf. Energiedichteerhöher eine eisenhaltige Verbindung zugesetzt wird, insbesondere Eisen-III-chlorid und/oder Eisensulfat. Das Zusetzen der erfolgt bevorzugt im Mazerator. Durch die eisenhaltige Verbindung wird das Brandverhalten der Formlinge verbessert.

Gemäß einer weiteren bevorzugten Ausgestaltung wird zumindest ein Aromastoff zugesetzt, um den Geruch der Formlinge zu verbessern. Als Beispiele seien Fichtennadelextrakt, Ätherische Öle und Fruchtaromen genannt.

Gemäß einem bevorzugten Ausführungsbeispiel werden die Holzausgangsmaterialien in einem Silo gelagert. Das Material ist zumindest vorzerkleinert, zum Beispiel gehäckselt. In einem weiteren Behälter werden die produktionsnotwendigen Fließfähigkeitsverbesserer gelagert. In dem Behälter wird in der Regel ein Rührwerk vorgesehen sein, um ein Absetzen der Schlämme zu verhindern. Schließlich ist ein dritter Vorratsbehälter für Zuschlagsstoffe zur Steuerung der Energiedichte vorgesehen. Die Ausgangsmaterialien werden einem Mazerator zugeführt, wo sie miteinander vermischt werden und wo gegebenenfalls eine weitere Zerkleinerung der Holz- und sonstigen Energieträgerausgangsstoffe erfolgt. Anders als beim herkömmlichen Verfahren sind folglich beim erfindungsgemäßen Verfahren die Anforderungen an die Homogenität der Holzausgangsstoffe bzw. Energieträgerausgangsstoffe wesentlich geringer. Durch den Einsatz eines Mazerators kann beim Formlingsherstellungsprozess die notwendige Zerkleinerung erfolgen. Bei Erreichen der Zielgröße wird die Masse in einen Schneckenextruder verschoben, wo die Ausformung der Formlinge erfolgt. In Abhängigkeit von der gewünschten Größe der Pellets wird die Matrize des Schneckenextruders entsprechend angepasst und ausgewählt. Die gewünschte Länge der Formlinge wird beispielsweise durch rotierende Messer erzielt, welche die austretende geformte Masse abschneiden. Im Schneckenextruder erfolgen eine Kompaktierung der Masse und die Formgebung zu Formlingen. Nach Verlassen des Schneckenextruders werden die Formlinge getrocknet. Dies kann beispielsweise auf einem Bandtrockner geschehen. Die Formlinge fallen nach dem Verlassen des Schneckenextruders und Abschneiden auf die gewünschte Länge auf ein Band des Bandtrockners. Das Trocknen geschieht bei einer Temperatur bis maximal 90 °C, vorzugsweise bei ca. 60-70 °C. Die zum Trocknen notwendige Wärme wird bevorzugt mit Formlingen erzeugt, welche als Ausschuss aus dem Produktionsprozess entnommen worden sind. Vorzugsweise werden die Formlinge zunächst bei einer Temperatur T1 angetrocknet und anschließend wird der Trocknungsvorgang bei einer Temperatur T2 abgeschlossen. T2 ist dabei höher als T1. Eine weitere bevorzugte Ausführung sieht vor, dass ein Bandtrockner eingesetzt wird, der über mehrere Stufen verläuft. Bevorzugt werden die Formlinge auf den Bandabschnitt gelegt, der sich dem Boden, d.h. dem Untergrund, am nächsten befindet. Im Laufe des Trocknungsvorganges werden die Formlinge in immer höhere Etagen hochbefördert, so dass am Ende bei der höchsten Stufe die fertig getrockneten Formlinge den Bandtrockner verlassen. Vor Verlassen des Bandtrockners oder nach Verlassen des Bandtrockners kann eine Sortierung vorgenommen werden. Formlinge, die nicht der gewünschten Größe oder Form entsprechen, werden hierbei aussortiert und werden einer Befeuerungsanlage zugeführt, welche die zum Trocknen der Formlinge erforderliche Energie bereitstellt. An das Ende des Produktionsprozesses schließt sich eine Analyse an, mit welcher beispielsweise Heizwert, Wassergehalt, Aschegehalt, Spurenstoffe wie Schwefel und Chlor, Abrieb und Maße bestimmt werden.

Die für die Durchführung des Verfahrens notwendigen Geräte, Mazerator, Schneckenextruder und Trocknungsanlage, werden nach einer weiteren Ausführungsform in einem einzelnen Behälter, beispielsweise einem Container, bereitgestellt. Ein solcher Container kann dann vergleichsweise einfach transportiert werden. Hierdurch ist es möglich, dass sich beispielsweise mehrere Forstwirte zusammenschließen und so ihre Restholzbestände und Altholzbestände zu wertvollem Brennstoff verarbeiten. Der einzelne Forstwirt des Zusammenschlusses bräuchte dann lediglich ein Silo zur Holzbevorratung bereitstellen, worin er zerkleinertes Holz, Rinden, Astholz, Altholz, etc. lagert. In dem Anlagencontainer sind vorteilhafterweise zudem die Behälter mit dem Fließfähigkeitsverbesserer und mit Stoffen, welche die Energiedichte erhöhen, vorgesehen. Als weiteren Behälter sieht der Forstwirt einen Behälter zur Aufnahme der fertigen Formlinge vor. Auf diese Weise lassen sich kostengünstig Formlinge aus Alt- und Abfallholz herstellen. Zudem wäre eine solche Anlage auch für Klein- und Kleinstforstbetriebe rentabel.

Der Mischung aus zerkleinertem Holz, Fließfähigkeitsverbesserern und ggf. Zuschlagsstoffen können geeignete energiehaltige Abfallstoffe zugesetzt werden. Diese können Pulverform, Granulatform haben oder Schlämme sein. Es handelt sich hierbei besonders bevorzugt um sog. Problemabfallstoffe wie Farb- und Lackpulver. Derart hergestellte Formlinge werden in überwachten Feuerungsanlagen verbrannt, um die Emission von Schadstoffen zu vermeiden. Ist überschüssige Energie oder Wärme aus den überwachten Feuerungsanlagen vorhanden, so kann diese genutzt werden, um Formlinge auf Vorrat zu produzieren, d. h. die Formlinge werden mit dieser Energie bzw. Wärme getrocknet und gelagert.

Es wird ein Verfahren zur Entsorgung energiehaltiger Abfallstoffe mit unterschiedlicher Konsistenz, Feuchtigkeitsgehalt und Partikelgröße beschrieben. Es weist die folgenden Schritte auf:
a) Feststellen der Energiemengen der zu entsorgenden energiehaltigen Abfallstoffe und Feststellen der Konsistenz der Abfallstoffe;
b) Mischen energiehaltiger Abfallstoffe unterschiedlicher Konsistenz miteinander, wobei das Mischen so erfolgt, dass die in der Mischung vorhandene Energiemenge optimiert wird und das Verhältnis der eingesetzten Abfallstoffe bezüglich der Konsistenz so ausgewählt wird, dass sie miteinander mischbar und verarbeitbar sind, und wobei zumindest pastöse Abfallstoffe, insbesondere Schlämme wie Klärschlamm und Papierschlamm, Kleister und/oder Reste aus Biogasanlagen, mit partikel- oder staubförmigen Abfallstoffen vermischt werden, so dass die partikel- oder staubförmigen Abfallstoffe durch die pastösen Abfallstoffe gebunden werden;
c) Ausformen von Formlingen aus der in Schritt b) hergestellten Mischung mit Hilfe eines Schneckenextruders;
d) Zuführen der Formlinge zu einer Anlage zur Verbrennung, Vergasung oder/und Verschwelung, insbesondere einer Müllverbrennungsanlage oder Pyrolyse; und
e) Verbrennen, Vergasen oder/und Verschwelen der Formlinge.

Ferner wird ein Verfahren zur Herstellung von Formlingen aus energiehaltigen Abfallstoffen mit unterschiedlicher Konsistenz, Feuchtigkeitsgehalt und Partikelgröße bereitgestellt. Es weist die folgenden Schritte auf:
a) Feststellen der Energiemengen der energiehaltigen Abfallstoffe und Feststellen der Konsistenz der Abfallstoffe;
b) Mischen energiehaltiger Abfallstoffe unterschiedlicher Konsistenz miteinander, wobei das Mischen so erfolgt, dass die in der Mischung vorhandene Energiemenge optimiert und die gegenseitige Mischbarkeit und Verarbeitbarkeit gewährleistet wird, und wobei zumindest pastöse Abfallstoffe, insbesondere Schlämme wie Klärschlamm und Papierschlamm, Kleister und/oder Reste aus Biogasanlagen, mit partikel- oder staubförmigen Abfallstoffen vermischt werden, so dass die partikel- oder staubförmigen Abfallstoffe durch die pastösen Abfallstoffe gebunden werden; und
c) Ausformen von Formlingen aus der in Schritt b) hergestellten Mischung mit Hilfe eines Schneckenextruders.

Ein Vorteil der vorgenannten erfindungsgemäßen Verfahren ist, dass die jeweiligen negativen physikalischen Eigenschaften diverser Problemabfallstoffe gegenseitig so kombiniert und ergänzt werden, dass insgesamt ein verwertbarer Stoff entsteht. Es ist grundsätzlich möglich, jeden beliebigen Abfallstoff durch Einarbeiten in die Masse, aus der die Formlinge gebildet werden, zu entsorgen und zu verwerten. Als Beispiele an energiehaltigen Abfallstoffen seien Farbpulver und Lackpulver genannt. Weitere Beispiele können dieser Offenbarung entnommen werden. Durch die erfindungsgemäße Verarbeitung zu Formlingen entsteht ein leicht handhabbares Material, das problemlos in alle Arten von Verbrennungs-, Vergasungs- oder Verschwelungsanlagen eingebracht werden kann. Durch das Binden der staubförmigen Abfallstoffe in den Formlingen werden die Entsorgungskosten für derartige Stoffe stark reduziert und in den Anlagen können aufwändige Vorkehrungen zum Handhaben dieser staubförmigen Problemabfallstoffe entfallen. Durch die Reduktion der Restmüllmenge nach dem Verbrennungsvorgang reduzieren sich die Deponiekosten. Schließlich werden die vom Gesetzgeber verlangten Anforderungen erfüllt, in Abfallstoffen enthaltene Energie auszunutzen.

Gemäß der Erfindung werden die Formlinge vor dem Zuführen zu der Verbrennungs-, Vergasungs- oder Verschwelungsanlage getrocknet, wobei die Trocknungstemperatur maximal 90°C beträgt. Das Vermischen der Stoffe erfolgt bevorzugt in einem Mazerator. Der Anteil der pastösen Abfallstoffe an der Mischung wird so eingestellt, dass eine fließfähige und formbare Masse entsteht, aus welcher standfeste Formlinge ausgebildet werden können. Der Anteil ist abhängig unter anderem von der Art und dem Anteil an staubförmigen Abfallstoffen. Je nach Art des staubförmigen Abfallstoffes vermögen diese eine verhältnismäßig große Wassermenge zu binden. Weiter hängt es vom Trockensubstanz- bzw. Feuchtigkeitsgehalt des pastösen Abfallstoffes selber ab. Der Trockensubstanzgehalt beträgt je nach Art der Aufbereitung zwischen 20 und 40 %. Für den Fachmann ist es ein Leichtes, die Abfallstoffe gezielt zu dosieren und die Mengen zu bestimmen, die zur Ausbildung standfester Formlinge benötigt werden. Da sich an einem gegebenen Standort in der Regel die anfallenden Abfallstoffe wiederholen, wird es möglich sein, die einzusetzenden Abfallmengen- und Abfallarten innerhalb einer bestimmten Bandbreite vorzubestimmen und einzustellen. Das Zuführen der Formlinge in die Verbrennungs-, Vergasungs- bzw. Verschwelungsanlage kann beispielsweise mit einer regelbaren Schnecke erfolgen.

Der Mischung aus Abfallstoffen nach Anspruch 1 können noch andere Zuschlagstoffe beigefügt werden. So ist vorgesehen, dass zur Erhöhung der Energiedichte Kohlenstaub- und/oder Altfette, gereinigtes Altöl, Fichtennadelextrakt oder harzhaltige Rinden beigemischt werden oder andere Stoffe mit hohem Energiegehalt. Damit kann ein Qualitätsausgleich erfolgen, falls die eingesetzten Ausgangsprodukte keine ausreichend hohe Energiedichte haben. Der Anteil an energiedichteerhöhenden Zuschlagsstoffen übersteigt vorzugsweise 2 Gew.-% nicht. Es können auch Holz und andere brandfördernde Mittel, wie Hausmüll oder Sperrmüll, zugemischt werden. Diese Stoffe müssen auf eine entsprechende Partikelgröße zerkleinert werden. Als Holzbestandteile werden insbesondere Altholz, Abfallholz, Abbruchholz oder Astholz eingesetzt. Auch Stroh, Getreide und Gras sind brandfördernde Mittel. Nach einer weiteren, bevorzugten Ausführung wird zu der Mischung aus Abfallstoffen und ggf. Energiedichteerhöhern oder/und brandfördernden Mitteln eine eisenhaltige Verbindung zugesetzt, insbesondere Eisen-III-chlorid und/oder Eisensulfat. Das Zusetzen erfolgt bevorzugt im Mazerator. Durch die eisenhaltige Verbindung wird das Brandverhalten der Formlinge verbessert.

Nachfolgend soll an einem Beispiel dreier Problemabfallstoffe die Wirkweise des Verfahrens erläutert werden. Die zu verwertenden Abfallstoffe sind: Reststäube aus einer Kunststoffbeschichtungsanlage, Restschlamm aus der betriebseigenen Kläranlage einer Ledergerberei, d. h. chromhaltiger Schlamm, und kohlenstoffhaltiger Zyklonschlamm einer Müllpyrolyseanlage. Bei den Reststäuben handelt es sich in der Regel um Farbmischungen aus den im Betrieb verwendeten Farben, die im Filtersystem zurückgehalten werden. Es sind folglich Gemische in Pulverform. Wie oben ausgeführt, sind derartige Stoffe äußerst problematisch zu entsorgen. Klärschlamm aus Ledergerbereien wird derzeit gekalkt und auf einer Kammerfilterpresse auf einen Trockensubstanzgehalt von wenigstens 35 % ausgepresst. Nachteilig ist unter anderem, dass der Kalkanteil sehr viel Wasser bindet, wodurch sich das Müllvolumen und insbesondere die Masse stark erhöht. Zyklonschlamm aus Pyrolyseanlagen weist einen Trockensubstanzgehalt von 20 bis 25 % auf. Er wurde bis jetzt noch weiter entwässert und dann der Deponie zugeführt. Es fallen somit hohe Trocknungs- und Deponiekosten an. Die genannten drei Stoffe lassen sich jedoch vorteilhaft gemäß der Erfindung zu einem Formling verbinden, wobei sich die nachteiligen Eigenschaften des jeweiligen Abfallstoffes in der Kombination zu vorteilhaften entwickeln. Der staubförmige Farbstoffabfall wird durch die beiden anderen feuchten und damit pastösen Abfallstoffe gebunden. Weiter wird vorgeschlagen, dass als Fällungsmittel Polymere anstelle Branntkalk für den Klärschlamm in der Ledergerberei zum Einsatz kommt. Dadurch wäre zwar der Feuchtigkeitsgehalt höher, da durch die Fällung mit Polymeren und die Entwässerung über eine Zentrifuge der Trockensubstanzgehalt auf ca. 25 % eingestellt würde, aber das Volumen wäre insgesamt geringer aufgrund des fehlenden Kalkanteiles und die zusätzliche Wassermenge wäre bei der Herstellung der erfindungsgemäßen Formlinge nicht schädlich, da dieses Wasser durch die staubförmigen Abfallstoffe gebunden würde. Der Zuschlagstoff Farbstoffstäube bindet eine große Menge an Wasser und Schlämmen.

Die in den Schlämmen enthaltenen mikrofeinen Faserstoffe und die bei der Nitratfällung verwendeten Eisenverbindungen entfalten ihre Wirkung in der erfindungsgemäßen Mischung, da sie Kunststofffarbpartikel, die an sich nicht wasserlöslich sind, und die Zyklonstaubpartikel binden und schmierende Wirkung zeigen. Zudem wird durch die verbrennungsfördernde Wirkung der Eisenverbindungen für eine vollständige Verbrennung oder Verschwelung eine durchgehende Erhitzung der Formlinge gewährleistet. Eine gute Verbrennung, Vergasung oder Verschwelung vermindert den Anfall von Flugasche und Schlacke. Der Formling trägt so zur Steuerung des Verbrennungs-, Vergasungs- bzw. Verschwelungsvorgangs positiv bei. Dadurch werden wiederum die Energieausbeute, der Durchsatz und damit die Wirtschaftlichkeit und Rendite entsprechender Anlagen gesteigert.

Gemäß einem bevorzugten Ausführungsbeispiel werden die Abfallstoffe in jeweils gesonderten Silos gelagert. Zuschlagsmaterial, z. B. Holz, Hausmüll etc. ist ggf. zumindest vorzerkleinert, zum Beispiel gehäckselt. Auch die pastösen Abfallstoffe und die staubförmigen Abfallstoffe werden in Behältern gelagert. In dem Behälter mit den pastösen Abfallstoffen wird in der Regel ein Rührwerk vorgesehen sein, um ein Absetzen von z. B. Schlämmen zu verhindern. Schließlich ist ggf. ein weiterer Vorratsbehälter für Zuschlagsstoffe zur Steuerung der Energiedichte vorgesehen. Die Ausgangsmaterialien werden einem Mazerator zugeführt, wo sie miteinander vermischt werden und wo gegebenenfalls eine weitere Zerkleinerung der Holz- und sonstigen Energieträgerausgangsstoffe erfolgt. Anders als beim herkömmlichen Verfahren sind folglich die Anforderungen an die Homogenität der Ausgangsstoffe wesentlich geringer. Durch den Einsatz eines Mazerators kann beim Formlingsherstellungsprozess die notwendige Zerkleinerung erfolgen. Bei Erreichen der Zielgröße wird die Masse in einen Schneckenextruder verschoben, wo die Ausformung der Formlinge erfolgt. In Abhängigkeit von der gewünschten Größe der Formlinge wird die Matrize des Schneckenextruders entsprechend angepasst und ausgewählt. Die gewünschte Länge der Formlinge wird beispielsweise durch rotierende Messer erzielt, welche die austretende geformte Masse abschneiden. Im Schneckenextruder erfolgen eine Kompaktierung der Masse und die Formgebung zu Formlingen. Nach Verlassen des Schneckenextruders werden die Formlinge getrocknet. Dies kann beispielsweise auf einem Bandtrockner geschehen. Die Formlinge fallen nach dem Verlassen des Schneckenextruders und Abschneiden auf die gewünschte Länge auf ein Band des Bandtrockners. Das Trocknen geschieht bei einer Temperatur bis maximal 90 °C, vorzugsweise bei ca. 60-70 °C. Die zum Trocknen notwendige Wärme wird bevorzugt aus dem Restwärmeaufkommen der Entsorgungsanlage entnommen. Da die Energie der Anlage wieder zugeführt wird, erhöht sich die Energiebilanz.

Die für die Durchführung des Verfahrens notwendigen Geräte, Mazerator, Schneckenextruder und ggf. Trocknungsanlage, werden nach einer weiteren Ausführungsform in einzelnen Behältern, beispielsweise Containern, bereitgestellt. Ein solcher Container z. B. kann dann vergleichsweise einfach transportiert werden. Hierdurch ist es möglich, dass Problemabfälle vor Ort, z. B. in Kläranlagen, Müllverbrennungsanlage, Pyrolyseanlagen etc., verarbeitet werden. In dem Anlagencontainer sind vorteilhafterweise zudem die Behälter mit ggf. notwendigen Zuschlagstoffen, wie Energiedichteerhöher, Eisenverbindung etc. fest vorgesehen.

## Patentansprüche

1. Verfahren zur Herstellung von Formlingen zur Verbrennung in Pelletbefeuerungsanlagen, umfassend die folgenden Schritte:
a) Vermischen von zerkleinertem Holz, insbesondere Altholz und/oder Astholz, mit pastösen Abfallstoffen als die Fließfähigkeit verbessernde Mittel, nämlich Klärschlamm, Papierschlamm und/oder Reste aus Biogasanlagen, wobei das Verhältnis von Holz zu Fließfähigkeitsverbesserer in der Mischung 85:15 bis 95:5 beträgt, wobei ein Trockensubstanzgehalt der pastösen Abfallstoffe 20 bis 40 % beträgt und wobei eine Mischung aus dem zerkleinerten Holz und den die Fließfähigkeit verbessernden Mitteln als eine fließfähige, formbare Masse entsteht,
b) Ausbilden von Formlingen in der Art von Pellets mit Hilfe eines Schneckenextruders
c) Trocknen der Formlinge, wobei das Trocknen bei Temperaturen bis max. 90 °C geschieht, und wobei der Anteil des die Fließfähigkeit verbessernden Mittels in den Formlingen nach dem Trocknen 3 bis 7 Gew.% beträgt, und
d) Sortieren der Formlinge nach dem Trocknen nach Größe oder Form, wobei aussortierte Formlinge einer Befeuerungsanlage zugeführt werden, welche die zum Trocknen von Formlingen erforderliche Energie bereitstellt.

2. Verfahren nach Anspruch 1, **dadurch gekennzeichnet, dass** in Schritt a) zur Erhöhung der Energiedichte Kohlenstaub und/oder Altfette eingemischt werden, wobei der Anteil maximal 2 Gew.-% beträgt.

3. Verfahren nach einem der vorstehenden Ansprüche, **dadurch gekennzeichnet, dass** das Vermischen in einem Mazerator erfolgt.

4. Verfahren nach einem der vorstehenden Ansprüche, **dadurch gekennzeichnet, dass** die Formlinge zunächst bei einer Temperatur T1 angetrocknet werden und dass anschließend bei einer Temperatur T2 der Trocknungsvorgang abgeschlossen wird, wobei T2 > T1 ist.

5. Verfahren nach einem der vorstehenden Ansprüche, **dadurch gekennzeichnet, dass** energiehaltige Abfallstoffe in Pulverform, in Granulatform oder als Schlämme zugesetzt werden, insbesondere solche energiehaltigen Abfallstoffe, die als Problemabfälle behandelt werden, wie Farb- und Lackreste.

6. Verfahren nach einem der vorstehenden Ansprüche, **dadurch gekennzeichnet, dass** die Formlinge nach der Extrusion einer überwachten Feuerungsanlage, insbesondere einem Kraftwerk, einer Müllverbrennungsanlage, Pyrolyse oder einem Zementwerk, zugeführt werden.

7. Verfahren nach einem der vorstehenden Ansprüche, **dadurch gekennzeichnet, dass** zu der Mischung aus Holz, Fließfähigkeitsverbesserer, ggf. Energiedichteerhöher und ggf. weiteren energiehaltigen Abfallstoffen eine eisenhaltige Verbindung, insbesondere Eisen-III-chlorid und/oder Eisensulfat, und/oder zumindest ein Aromastoff, insbesondere Fichtennadelextrakt oder Fruchtaroma, zugesetzt wird, wobei das Zusetzen insbesondere in dem Mazerator erfolgt.

## Claims

1. A method for the manufacture of shaped articles for combustion in pellet combustion units, comprising the following steps:
a) mixing comminuted timber, in particular waste timber and/or branch timber, with paste-like waste material as the fluidity improving agent, namely sewage sludge, paper slurry and/or biogas unit residues, wherein the ratio of timber to fluidity improving agent in the mixture is 85:15 to 95:5, wherein a dry matter content for the paste-like waste material is 20% to 40% and wherein a mixture of the comminuted timber and the fluidity improving agent is formed as a fluid, malleable mass;
b) forming shaped articles like pellets with the aid of a screw extruder;
c) drying the shaped articles, wherein drying is carried out at temperatures up to a maximum of 90°C, and wherein the proportion of the fluidity improving agent in the shaped articles following drying is 3% to 7% by weight; and
d) sorting the shaped articles following drying according to size or shape, wherein shaped articles which have been sorted out are conveyed to a combustion unit which provides the energy required to dry the shaped articles.

2. The method as claimed in claim 1, **characterized in that** coal dust and/or spent grease is admixed in step a) in order to increase the energy density, wherein the proportion is a maximum of 2% by weight.

3. The method as claimed in one of the preceding claims, **characterized in that** the admixing is carried out in a macerator.

4. The method as claimed in one of the preceding claims, **characterized in that** the shaped articles are initially dried at a temperature T1 and then the drying process is completed at a temperature T2, wherein T2 > T1.

5. The method as claimed in one of the preceding claims, **characterized in that** the energy-containing waste material is added in the powder form, in the form of granulates or as slurry, in particular those energy-containing waste materials which are treated as problematic waste, such as dye and paint residues.

6. The method as claimed in one of the preceding claims, **characterized in that** following extrusion, the shaped articles are conveyed to a controlled combustion unit, in particular to a power station, to a waste incineration unit, to pyrolysis or to a cement works.

7. The method as claimed in one of the preceding claims, **characterized in that** an iron-containing compound, in particular iron III chloride and/or iron sulphate and/or at least one fragrancing agent, in particular pine needle extract or fruit aroma, is added to the mixture of timber, fluidity improving agent, optional energy density improver and optional further energy-containing waste materials, wherein in particular, addition is carried out in the macerator.

## Revendications

1. Procédé pour la production de pièces moulées pour la combustion dans des chaudières à pellets comprenant les étapes suivantes :
a) mélange de bois broyé, en particulier de bois usagé et/ou de bois de branchages, à des déchets pâteux comme agents améliorant la fluidité, à savoir des boues d'épuration, des boues de papeterie et/ou des restes provenant d'installations de biogaz, cependant que le rapport du bois et des agents améliorant la fluidité dans le mélange est de 85:15 à 95:5, cependant qu'une teneur en matière sèche des déchets pâteux est comprise entre 20 et 40% et cependant qu'un mélange de bois broyé et d'agents améliorant la fluidité se forme en tant que masse fluide apte à être formée,
b) formation de pièces moulées du type pellets à l'aide d'une extrudeuse à vis,
c) séchage des pièces moulées, cependant que le séchage a lieu à des températures de 90° C maximum et cependant que le pourcentage de l'agent améliorant la fluidité dans les pièces moulées après le séchage est de 3 à 7% en poids et
d) tri des pièces moulées après le séchage selon la taille et la forme, cependant que des pièces moulées triées sont amenées à une chaudière qui met à disposition l'énergie nécessaire au séchage des pièces moulées.

2. Procédé selon la revendication 1, **caractérisé en ce qu'**à l'étape a) pour l'augmentation de la densité d'énergie de la poussière de charbon et/ou des graisses usagées sont ajoutées au mélange, cependant que le pourcentage est de 2% en poids maximum.

3. Procédé selon l'une des revendications précédentes, **caractérisé en ce que** le mélange se fait dans un macérateur.

4. Procédé selon l'une des revendications précédentes, **caractérisé en ce que** le séchage des pièces moulées est tout d'abord amorcé à une température T1 et que le processus de séchage est ensuite terminé à une température T2, cependant que T2 > T1.

5. Procédé selon l'une des revendications précédentes, **caractérisé en ce que** des déchets énergétiques sont ajoutés sous forme de poudre, sous forme de granulés ou de boues, en particulier des déchets qui énergétiques qui sont traités comme des déchets problématiques comme les restes de peinture et de laque.

6. Procédé selon l'une des revendications précédentes, **caractérisé en ce que** les pièces moulées sont amenées après l'extrusion à une installation de combustion surveillée, en particulier à une centrale électrique, à une installation d'incinération de déchets, à une pyrolyse ou à une cimenterie.

7. Procédé selon l'une des revendications précédentes, **caractérisé en ce qu'**un composé contenant du fer, en particulier du chlorure ferrique et/ou du sulfate de fer, et/ou au moins une substance aromatique, en particulier un extrait d'aiguilles de pin ou un arôme de fruit, est ajouté au mélange de bois, à l'agent améliorant la fluidité, le cas échéant, à l'agent qui augmente la densité d'énergie ou, le cas échéant, à d'autres déchets énergétiques, cependant que l'ajout se fait dans le macérateur.
